# EUROPEAN PATENT SPECIFICATION

(11) **EP 3 196 436 B1**
(45) Date of publication and mention of the grant of the patent: **05.12.2018**
(21) Application number: 15842525.6
(22) Date of filing: 18.09.2015
(51) Int. Cl.: F02B 25/16, F02B 43/00, F02D 19/08, F02D 21/08, F02M 25/00, F02M 26/00, F02B 23/06, F02M 26/20, F02B 7/06

(54) **RECIPROCATING ENGINE**
HUBKOLBENMOTOR
MOTEUR ALTERNATIF

(30) Priority: 18.09.2014 JP 2014190325
(43) Date of publication of application: 26.07.2017
(73) Proprietor: IHI Corporation, Tokyo 135-8710 (JP)
(72) Inventor: MASUDA, Yutaka, Tokyo 135-8710 (JP); KUGE, Takahiro, Tokyo 135-8710 (JP); YAMADA, Takayuki, Tokyo 135-8710 (JP)
(74) Representative: TBK
(86) International application number: PCT/JP2015/076677
(87) International publication number: WO 2016/043312

(56) References cited:
- EP-A2- 1 975 394
- WO-A1-2014/114846
- DE-A1-102011 003 909
- GB-A- 2 374 634
- JP-A- S6 473 167
- JP-A- H06 257 520
- JP-A- 2009 052 520
- JP-A- 2010 255 442
- JP-A- 2012 154 188
- JP-A- 2012 154 189
- JP-A- 2013 133 708
- US-A1- 2009 241 896
- US-A1- 2012 318 226
- US-B1- 7 188 587

## Description

### Technical Field

The present disclosure relates to a reciprocating engine in which a piston reciprocates due to explosion pressure of a fuel.

Priority is claimed on Japanese Patent Application No. 2014-190325 filed on September 18, 2014, the content of which is incorporated herein by reference.

### Background Art

In recent years, a plurality of combustion methods of a fuel in an engine have been developed. For example, Patent Document 1 discloses a configuration in which both types of a nozzle that ejects a liquid fuel and a nozzle that ejects a gaseous fuel (fuel gas) are provided as nozzles mounted on an engine. In such a configuration, the liquid fuel is injected and is ignited, and then the fuel gas is injected to the ignition such that it is possible to expand combustion. Further, Patent Document 2 discloses an engine which performs combustion using a plurality of fuels.

### Citation List

### Patent Document

[Patent Document 1] Japanese Unexamined Patent Application, First Publication No. 2013-124586
[Patent Document 2] EP 1 975 394 A2

### Summary of Invention

### Technical Problem

As described above, in the configuration including both types of the nozzle that ejects the liquid fuel and the nozzle that ejects the fuel gas, a part of the liquid fuel or the fuel gas, which are injected into a cylinder, rapidly combusts and locally have a high temperature, and emission control substances such as NOx are likely to be produced. Patent Document 2 describes a combustion engine having the features depicted in the preamble portion of claim 1. In Patent Document 2, the combustion of fuel gas is not considered.

In consideration of such a problem, an object of the present disclosure is to provide a reciprocating engine in which it is possible to less produce NOx in response to combustion of a liquid fuel and a fuel gas.

### Solution to Problem

In order to solve the problem described above, there is provided a reciprocating engine according to claim 1 that has a piston which reciprocates in a cylinder due to explosion pressure produced in a combustion chamber formed in the cylinder, the reciprocating engine including: a liquid fuel supply unit that supplies a liquid fuel to the combustion chamber; and a gas supply unit that supplies, into the cylinder, fuel gas and EGR gas as exhaust gas which is produced from combustion in the combustion chamber and is discharged from the combustion chamber.

### Effects of Invention

According to the present disclosure, it is possible to less produce NOx due to combustion of a liquid fuel and fuel gas.

### Brief Description of Drawings

FIG. 1 is a diagram showing an entire configuration of a uniflow scavenging two-cycle engine.
FIG. 2A is a view showing a scavenging port.
FIG. 2B is a view showing the scavenging port.
FIG. 3 is a block diagram schematically showing supply routes of fuel gas, a liquid fuel, and EGR gas to a cylinder.
FIG. 4A is a view showing arrangement of supply units in a combustion chamber.
FIG. 4B is a view showing arrangement of supply units in the combustion chamber.
FIG. 5A is a view showing supply of the fuel gas, the liquid fuel, and the EGR gas to the combustion chamber.
FIG. 5B is a view showing supply of the fuel gas, the liquid fuel, and the EGR gas to the combustion chamber.
FIG. 6A is a view showing arrangement of supply units in a first modification example.
FIG. 6B is a view showing arrangement of supply units in a second modification example.
FIG. 6C is a view showing arrangement of supply units in a third modification example.
FIG. 7 is a block diagram schematically showing supply routes of fuel gas, a liquid fuel, and EGR gas to a cylinder in a fourth modification example.
FIG. 8A is a view showing arrangement of supply units in a combustion chamber in a fourth modification example.
FIG. 8B is a view showing arrangement of supply units in the combustion chamber in the fourth modification example.

### Description of Embodiments

Hereinafter, a preferred embodiment according to the present disclosure will be described with reference to the accompanying figures. A dimension, a material, a specific number other than the dimension and the material, or the like is provided only as an example for easy understanding of disclosed content, and the disclosure is not limited thereto except for a case where particular description is provided. Note that, in the present specification and the figures, an element having substantially the same function and configuration is assigned with the same reference sign and repeated description thereof is omitted, and illustration of an element without a direct relationship with the present disclosure is omitted in the figures.

In the following embodiment, a uniflow scavenging two-cycle engine in which gas flows in one direction inside a cylinder is described. However, a type of engine is not limited to the uniflow scavenging two-cycle type, and a reciprocating engine that has a piston which reciprocates in a cylinder due to explosion pressure produced in a combustion chamber formed in the cylinder may be employed.

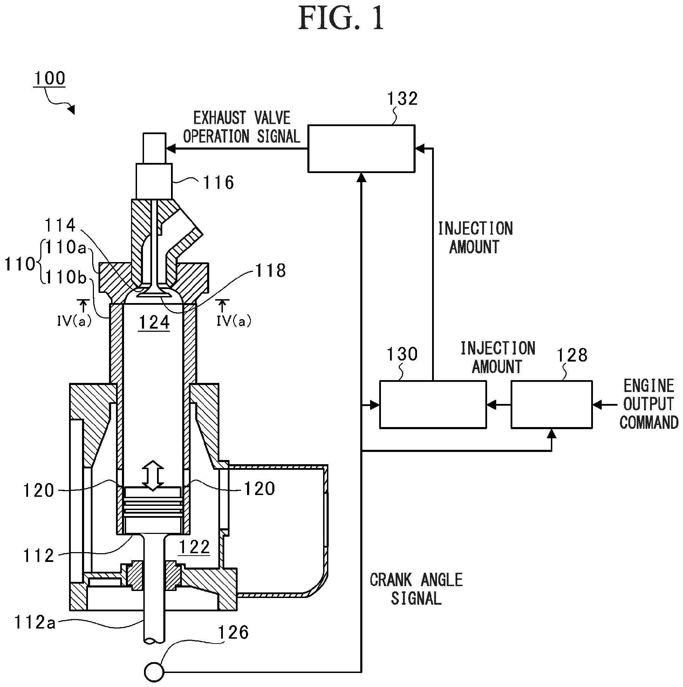

FIG. 1 is a view showing an entire configuration of a uniflow scavenging two-cycle engine 100 (reciprocating engine). The uniflow scavenging two-cycle engine 100 of the embodiment is used in a ship or the like. The uniflow scavenging two-cycle engine 100 is configured to include a cylinder 110, a piston 112, an exhaust port 114, an exhaust valve driving device 116, an exhaust valve 118, a scavenging port 120, a scavenging chamber 122, a combustion chamber 124, a rotary encoder 126, a governor (speed regulator) 128, a supply control unit 130, and an exhaust control unit 132.

In the uniflow scavenging two-cycle engine 100, the piston 112 reciprocates in the cylinder 110 through four continuous strokes of intake (gas feeding), compression, combustion, and exhaust.

One end of a piston rod 112a is fixed to the piston 112. The piston rod 112a is connected to a crosshead (not shown), and thus, when the piston 112 reciprocates while sliding in the cylinder 110, a crankshaft rotates via the crosshead and a connecting rod. In the uniflow scavenging two-cycle engine, since it is possible to form a relatively long stroke in the cylinder 110 and it is possible to cause the crosshead to receive lateral pressure acting on the piston 112, it is possible to achieve a high output of the uniflow scavenging two-cycle engine 100.

The exhaust port 114 is an opening provided in a cylinder head 110a positioned on an upper side in FIG. 1 from the position of top dead center of the piston 112, and is opened and closed to discharge exhaust gas produced after combustion in the cylinder 110. The exhaust valve driving device 116 opens and closes the exhaust port 114 by causing the exhaust valve 118 to slide vertically at a predetermined timing. In this manner, the exhaust gas discharged via the exhaust port 114 is discharged to the outside, for example, after the exhaust gas is supplied to a turbine side of a supercharger (not shown). In addition, a part of the exhaust gas discharged from the exhaust port 114 circulates in the cylinder 110 as EGR gas. A supply route of the EGR gas will be described below in detail.

The scavenging port 120 is a hole penetrating from an inner circumferential surface (inner circumferential surface of a cylinder block 110b) to an outer circumferential surface of the cylinder 110 on the lower end side (lower side in FIG.1) of the cylinder 110.

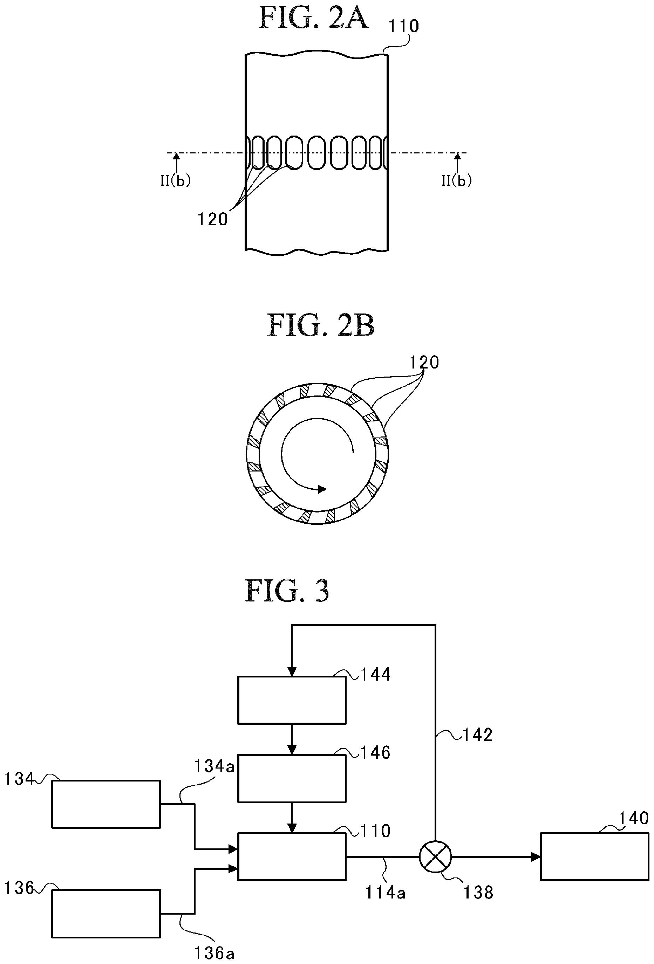

FIGS. 2A and 2B are views showing the scavenging port 120, FIG. 2A shows a side view showing the vicinity of the scavenging port 120 of the cylinder 110, and FIG. 2B is a sectional view taken along line II(b) -II(b) in FIG. 2A.

As shown in FIGS. 2A and 2B, a plurality of scavenging port 120 are provided over an entire circumference of the cylinder 110. The scavenging ports 120 suction active gas in the cylinder 110 in response to the sliding motion of the piston 112. The active gas contains an oxidizing agent such as oxygen or ozone, or a mixture thereof (for example, air).

The scavenging port 120 has a shape that guides the scavenging gas from an outside to an inside of the cylinder 110 in a direction inclined with respect to a radial direction of the cylinder 110. Specifically, the scavenging port 120 extends in a direction inclined with respect to the radial direction of the cylinder 110. In addition, any scavenging port 120 provided over the entire circumference of the cylinder 110 has a substantially equal angle inclined with respect to the radial direction. As a result, as shown with an arrow in FIG. 2B, the scavenging gas forms swirling flow, and rises in the cylinder 110 so as to flow to the exhaust port 114.

Back to FIG. 1 again, the active gas (for example, air) pressurized by a compressor of the supercharger (not shown) is sealed in the scavenging chamber 122, and the active gas is suctioned from the scavenging port 120 due to differential pressure between the scavenging chamber 122 and the cylinder 110. A pressure in the scavenging chamber 122 can be substantially constant; however, a manometer may be provided in the scavenging port 120 in a case where the pressure in the scavenging chamber 122 changes, and other parameters such as an injection amount of the fuel gas according to a measurement value may be controlled.

The combustion chamber 124 is surrounded by the cylinder head 110a, a cylinder liner in the cylinder block 110b, and the piston 112. The combustion chamber 124 is supplied with a liquid fuel, fuel gas (a gaseous fuel), and EGR gas through a liquid fuel supply unit, a fuel gas supply unit, and an EGR supply unit. The supply units are omitted in FIG. 1 for easy understanding, and will be described below.

The rotary encoder 126 is provided in the crankshaft (not shown) and an angle signal of the crankshaft (hereinafter, referred to as a crank angle signal) is detected.

The governor 128 calculates an injection amount of the liquid fuel, the fuel gas, and the EGR gas, based on an engine output command value input from a higher-rank control device, and engine speed in response to a crank angle signal from the rotary encoder 126, and outputs the calculated amount to the supply control unit 130.

The supply control unit 130 controls the liquid fuel supply unit, the fuel gas supply unit, and the EGR supply unit, based on information representing an injection amount of the liquid fuel, the fuel gas, and the EGR gas input from the governor 128, and the crank angle signal from the rotary encoder 126.

The exhaust control unit 132 outputs an exhaust valve operation signal to the exhaust valve driving device 116, based on information representing an injection amount of the liquid fuel, the fuel gas, and the EGR gas input from the supply control unit 130, and the crank angle signal from the rotary encoder 126.

FIG.. 3 is a block diagram schematically showing supply routes of the fuel gas, the liquid fuel, and the EGR gas to the cylinder 110. A fuel gas storage unit 134 and a liquid fuel storage unit 136 are configured of a tank or the like, thus, the fuel gas is stored in the fuel gas storage unit 134, and the liquid fuel is stored in the liquid fuel storage unit 136. The fuel gas stored in the fuel gas storage unit 134 and the liquid fuel stored in the liquid fuel storage unit 136 are supplied into the cylinder 110 through a fuel gas supply path 134a and a liquid fuel supply path 136a, respectively.

In addition, an exhaust flow path 114a is a flow path of the exhaust gas, which communicates with the exhaust port 114 described above. The exhaust flow path 114a is provided with a three-way valve 138. The three way valve 138 guides, to an exhaust manifold 140 side, the exhaust gas that is produced due to the combustion in the combustion chamber 124 and is discharged from the exhaust port 114 to the outside of the cylinder 110. In addition, the three-way valve 138 guides a part of the exhaust gas to a reflow path 142 that leads the exhaust gas to the cylinder 110. In the embodiment, exhaust gas that reflows to the cylinder 110 is referred to as the EGR gas.

A degree of opening of the three-way valve 138 is regulated, under control by the supply control unit 130 described above, in proportion to an injection amount of the EGR gas that is injected into the cylinder 110.

The reflow path 142 is provided with a compressor 144 and a heat exchanger 146. Thus, the exhaust gas (EGR gas) circulating through the reflow path 142 is pressurized to have high pressure by the compressor 144, is cooled by the heat exchanger 146, and then is supplied to the cylinder 110.

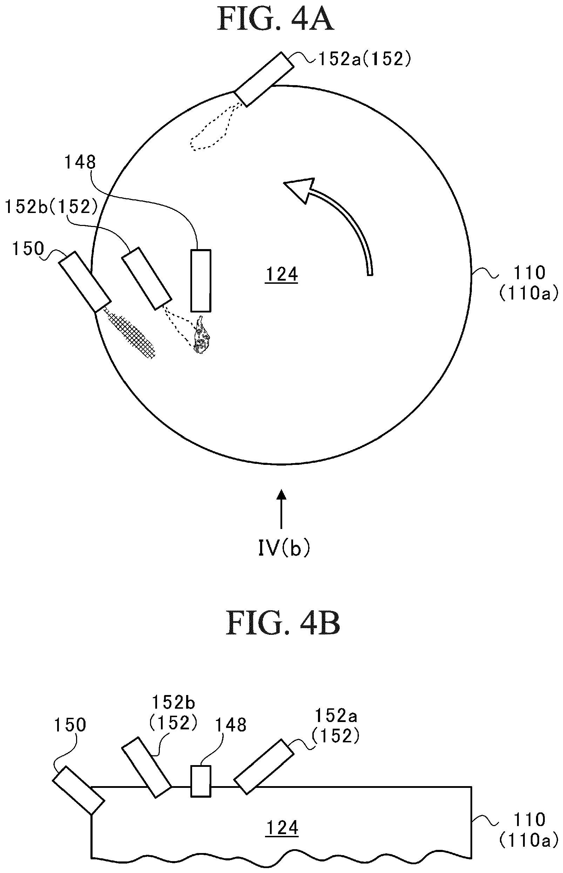

FIGS. 4A and 4B are views showing arrangements of the supply units in the combustion chamber 124, FIG. 4A shows a sectional view taken along line IV(a)-IV(a) in FIG. 1, and FIG. 4B is a view in an arrow IV(b) direction of FIG. 4A. For easy understanding, FIGS. 4A and 4B schematically show only the combustion chamber 124 and the supply units in the cylinder 110.

As shown in FIGS. 4A and 4B, the cylinder 110 (cylinder head 110a) is provided with the liquid fuel supply unit 148, the fuel gas supply unit 150 (gas supply unit), and the EGR supply unit 152 (gas supply unit). The supply units (the liquid fuel supply unit 148, the fuel gas supply unit 150, and the EGR supply unit 152) are configured of injection nozzles, respectively, and are actuated under control by the supply control unit 130.

The liquid fuel supply unit 148 communicates with a downstream end of the liquid fuel supply path 136a and injects (supplies) the liquid fuel stored in the liquid fuel storage unit 136 into the cylinder 110 (combustion chamber 124).

The fuel gas supply unit 150 communicates with a downstream end of the fuel gas supply path 134a and injects, into the cylinder 110 (combustion chamber 124), the fuel gas stored in the fuel gas storage unit 134.

In the embodiment, the EGR supply unit 152 is configured of two injection nozzles (a first EGR supply unit 152a and a second EGR supply unit 152b), both of which communicate with a downstream end of the reflow path 142 and inject, into the cylinder 110 (combustion chamber 124), the EGR gas circulating through the reflow path 142.

In addition, as shown with an outline arrow in FIG. 4A, swirling flow due to the active gas flowing in the scavenging port 120 is generated in the combustion chamber 124. At this time, the first EGR supply unit 152a is disposed on the upstream side in a flow direction of the swirling flow from the fuel gas supply unit 150, for example, within a range of a semiperimeter of the cylinder 110. In addition, the second EGR supply unit 152b is disposed on the upstream side in a flow direction of the swirling flow from the liquid fuel supply unit 148, for example, within a range of a semiperimeter of the cylinder 110. The range is from the position of the liquid fuel supply unit 148 as a starting point to a half of the cylinder 110 in the circumferential direction thereof on the upstream side in the flow direction of the swirling flow.

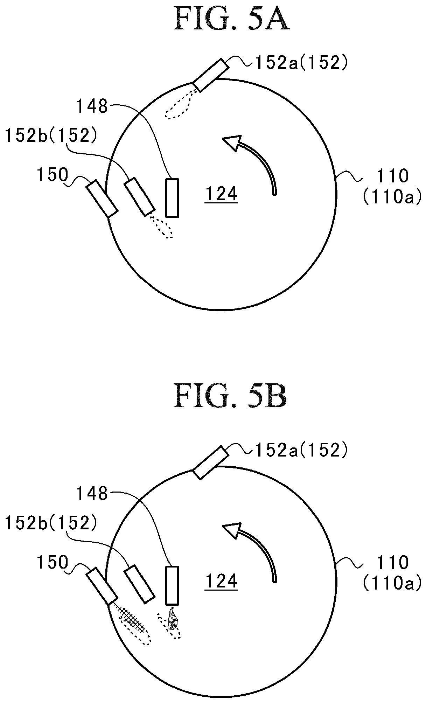

FIGS. 5A and 5B are views showing supply of the liquid fuel, the fuel gas, and the EGR gas to the combustion chamber 124. As shown in FIG. 5A, the EGR gas is injected from the first EGR supply unit 152a and the second EGR supply unit 152b. To be exact, after the EGR gas is injected from the first EGR supply unit 152a, the EGR gas is injected from the second EGR supply unit 152b.

Then, as shown in FIG. 5B, the liquid fuel is injected from the liquid fuel supply unit 148. After the liquid fuel spontaneously ignites, the fuel gas is injected from the fuel gas supply unit 150. At this time, the EGR gas that flows with the swirling flow and is injected from the second EGR supply unit 152b flows in an injecting direction of the liquid fuel from the liquid fuel supply unit 148 and the liquid fuel supply unit 148 injects the liquid fuel toward the EGR gas.

In addition, the EGR gas that flows with the swirling flow and is injected from the first EGR supply unit 152a flows in an injecting direction of the fuel gas from the fuel gas supply unit 150 and the fuel gas supply unit 150 injects the fuel gas toward the EGR gas.

Therefore, the EGR gas is locally present in a high concentration around the liquid fuel and the fuel gas supplied into the cylinder 110. As a result, local and excessive temperature rise is reduced such that an amount of NOx generation is reduced, owing to reduction in an oxygen concentration around the fuel gas and the liquid fuel, or effects of gases having large specific heat, such as carbon dioxide gas or water vapor contained in the EGR gas.

In addition, the EGR gas is supplied to only the vicinity of a portion in the combustion chamber 124, to which the liquid fuel and the fuel gas are first supplied. Therefore, it is possible to decrease a supply amount of the EGR gas, compared to a configuration in which the EGR gas is supplied to the entire region in the combustion chamber 124.

In addition, the first EGR supply unit 152a and the second EGR supply unit 152b are provided on the upstream side of the swirling flow from the fuel gas supply unit 150 and the liquid fuel supply unit 148, respectively. Therefore, the fuel gas and the liquid fuel are injected to the EGR gas that flows with the swirling flow and is diffused in an appropriate manner. As a result, the fuel gas or the liquid fuel are likely to come into contact with the EGR gas, and the amount of NOx generation is further reduced.

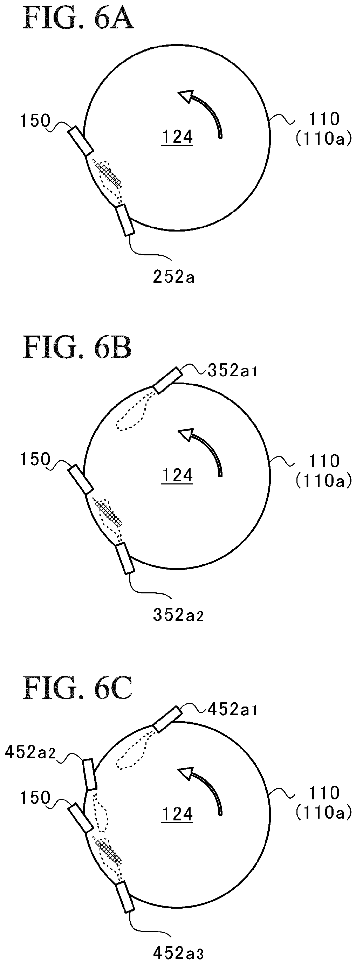

FIGS. 6A to 6C are views showing arrangement of supply units in a first modification example, a second modification example, and a third modification example of the embodiment. In FIGS. 6A to 6C, the liquid fuel supply unit 148 and the second EGR supply unit 152b are omitted for easy understanding.

In the first modification example, as shown in FIG. 6A, a first EGR supply unit 252a is disposed on the downstream side in the flow direction of the swirling flow from the fuel gas supply unit 150. The first EGR supply unit 252a injects the EGR gas toward the upstream in the flow direction of the swirling flow. As described above, the first EGR supply unit 252a may be disposed on the downstream side of the swirling flow from the fuel gas supply unit 150.

Here, the first EGR supply unit 252a is disposed to have an orientation in which the first EGR supply unit substantially faces the fuel gas supply unit 150 in the injecting direction of the fuel gas. However, at least, it is sufficient to keep a positional relationship in which a flow path of the EGR gas injected from the first EGR supply unit 252a intersects with a flow path of the fuel gas injected from the fuel gas supply unit 150.

In addition, in the second modification example, as shown in FIG. 6B, a first EGR supply unit 352a1 is disposed on the upstream side in the flow direction of the swirling flow from the fuel gas supply unit 150, and a first EGR supply unit 352a2 is disposed on the downstream side therein. The first EGR supply unit 352a1 on the upstream side injects the EGR gas toward the downstream side in the flowing direction of the swirling flow, and the first EGR supply unit 352a2 on the downstream side injects the EGR gas toward the upstream side in the flowing direction of the swirling flow.

In addition, in the third modification example, as shown in FIG. 6C, two first EGR supply units 452a1 and 452a2 are disposed on the upstream side in the flow direction of the swirling flow from the fuel gas supply unit 150, and a first EGR supply unit 452a3 is disposed on the downstream side therein. The first EGR supply units 452a1 and 452a2 on the upstream side inject the EGR gas toward the downstream side in the flowing direction of the swirling flow, and the first EGR supply unit 452a3 on the downstream side injects the EGR gas toward the upstream side in the flowing direction of the swirling flow.

As described in the second modification example and the third modification example, the two or more first EGR supply units 352a1, 352a2, 452a1, 452a2, and 452a3 may be provided.

In any one of the first to third modification examples described above, the first EGR supply units 252a, 352a1, 352a2, 452a1, 452a2, and 452a3 are set to have a position and an injection timing such that the EGR gas is positioned in a state of being diffused in an appropriate manner at a position at which the fuel gas is injected from the fuel gas supply unit 150 at a timing at which the fuel gas is injected from the fuel gas supply unit 150.

In addition, in the first to third modification examples, the examples, in which the configuration of the first EGR supply unit 152a in the embodiment described above is modified, are described. Here, the description is not provided in detail so as not to be redundant; however, it is possible to perform the same modifications to the second EGR supply unit 152b.

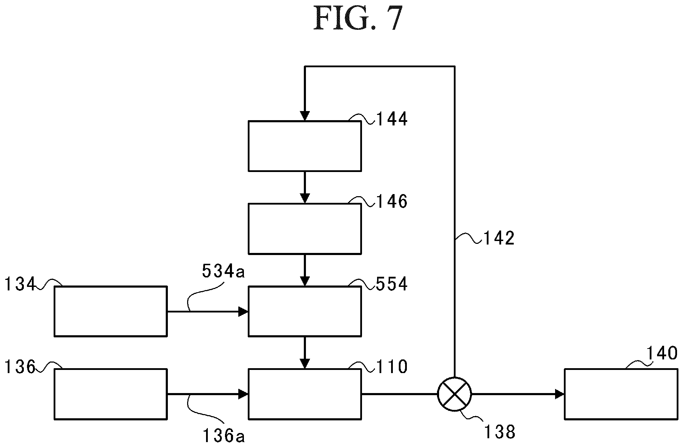

FIG. 7 is a block diagram schematically showing supply routes of the fuel gas, the liquid fuel, and the EGR gas to the cylinder 110 in a fourth modification example of the embodiment. As shown in FIG. 7, in the fourth modification example, a mixing chamber 554 is provided on the downstream side of the heat exchanger 146 in the reflow path 142.

In addition, the fuel gas supply path 534a is connected to the mixing chamber 554. The EGR gas supplied from the heat exchanger 146 and the fuel gas supplied from the fuel gas storage unit 134 are mixed in the mixing chamber 554.

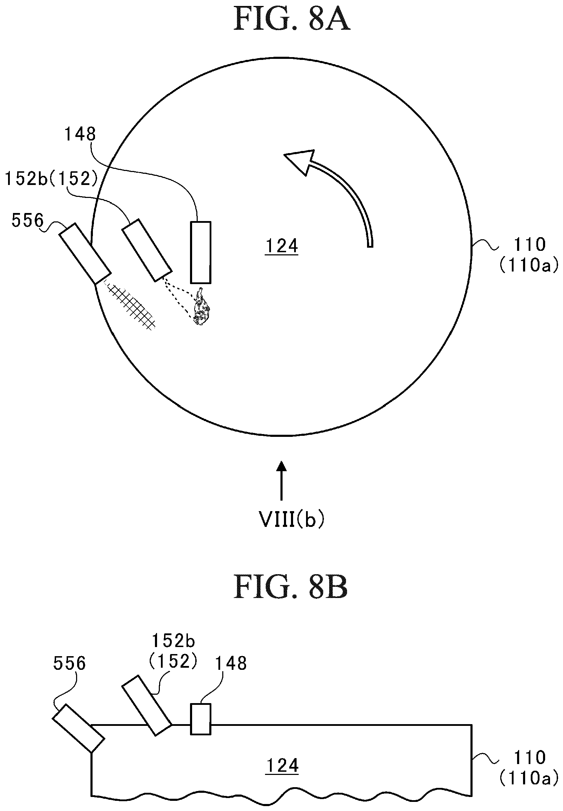

FIGS. 8A and 8B are views showing arrangement of supply units in the combustion chamber 124 in a fourth modification example. Fig. 8A shows a sectional view of a position corresponding to that in FIG. 4A in the fourth modification example, and FIG. 8B shows a view in an arrow VIII(b) direction in FIG. 8A. For easy understanding, FIGS. 8A and 8B schematically show only the combustion chamber 124 and the supply units in the cylinder 110.

In the embodiment described above, the configuration in which the cylinder head 110a is provided with the first EGR supply unit 152a and the fuel gas supply unit 150; however, as shown in FIGS. 8A and 8B, in the fourth modification example, instead of the first EGR supply unit 152a and the fuel gas supply unit 150, a gas supply unit 556 is provide.

The gas supply unit 556 communicates with the downstream end of the reflow path 142 and injects, into the cylinder 110, premixed gas of the fuel gas and the EGR gas which circulate the downstream side of the reflow path 142 and are mixed in the mixing chamber 554.

As described above, the fuel gas and the EGR gas are mixed in the mixing chamber 554 in advance, and thereby the fuel gas and the EGR gas are sufficiently mixed such that it is possible to further reduce NOx.

In the embodiment and the modification examples described above, the configurations in which the scavenging port 120 generates the swirling flow generates; however, a configuration, in which the scavenging port 120 extends in the radial direction of the cylinder 110 and does not generate the swirling flow, may be employed.

As described above, the preferred embodiment of the present disclosure is described with reference to the accompanying figures; however, it is needless to say that the present disclosure is not limited to the embodiment. It is obvious for those skilled in the art to conceive various modification examples or alteration examples within the range of the claims, and thus it is understood that the examples are included within the technical scope of the present disclosure.

### Industrial Applicability

The present disclosure can be applied to a reciprocating engine in which a piston reciprocates due to explosion pressure of a fuel.

### Reference Signs List

- 100: uniflow scavenging two-cycle engine (reciprocating engine)
- 110: cylinder
- 112: piston
- 120: scavenging port
- 124: combustion chamber
- 148: liquid fuel supply unit
- 150: fuel gas supply unit (gas supply unit)
- 152: EGR supply unit (gas supply unit)
- 152a, 252a, 352a1, 352a2, 452a1, 452a2, 452a3: first EGR supply unit
- 152b: second EGR supply unit
- 556: gas supply unit

## Claims

1. A reciprocating engine (100) that has a piston (112) which reciprocates in a cylinder (110) due to explosion pressure produced in a combustion chamber (124) formed in the cylinder, the reciprocating engine comprising:
a liquid fuel supply unit that supplies a liquid fuel directly into the combustion chamber,
**characterized in that**
the reciprocating engine further comprises a gas supply unit (150, 152) that supplies, directly into the combustion chamber, fuel gas and EGR gas as exhaust gas which is produced from combustion in the combustion chamber and is discharged from the combustion chamber.

2. The reciprocating engine according to Claim 1,
wherein the gas supply unit includes
an EGR supply unit (152) that supplies the EGR gas directly into the combustion chamber, and
a fuel gas supply unit (150) that supplies the fuel gas directly into the combustion chamber.

3. The reciprocating engine according to Claim 2,
wherein the liquid fuel supply unit supplies the liquid fuel toward the EGR gas supplied directly into the combustion chamber from the EGR supply unit.

4. The reciprocating engine according to Claim 2,
wherein the fuel gas supply unit supplies the fuel gas toward the EGR gas supplied directly into the combustion chamber from the EGR supply unit.

5. The reciprocating engine according to Claim 3,
wherein the fuel gas supply unit supplies the fuel gas toward the EGR gas supplied directly into the combustion chamber from the EGR supply unit.

6. The reciprocating engine according to any one of Claims 2 to 5, further comprising:
a scavenging port (120) that is formed in the cylinder, causes active gas to flow to the cylinder, and produces swirling flow with the active gas,
wherein the EGR supply unit is disposed on an upstream side of the swirling flow from at least one of the fuel gas supply unit and the liquid fuel supply unit.

7. The reciprocating engine according to Claim 1,
wherein the gas supply unit supplies, directly into the combustion chamber, premixed gas obtained by mixing the EGR gas and the fuel gas.

## Patentansprüche

1. Hubkolbenmotor (100), der einen Kolben (112) aufweist, der in einem Zylinder (110) aufgrund des Explosionsdrucks, der in einer in dem Zylinder gebildeten Brennkammer (124) erzeugt wird, hin- und herbewegt wird, wobei der Hubkolbenmotor umfasst:
eine Flüssigbrennstoffzuführeinheit, die einen Flüssigbrennstoff direkt in die Brennkammer zuführt,
**dadurch gekennzeichnet, dass**
der Hubkolbenmotor ferner eine Gaszuführeinheit (150, 152) umfasst, die, direkt in die Brennkammer, Brennstoffgas und AGR-Gas als Abgas zuführt, das bei der Verbrennung in der Brennkammer erzeugt wird und aus der Brennkammer abgegeben wird.

2. Hubkolbenmotor nach Anspruch 1,
wobei die Gaszuführeinheit aufweist:
eine AGR-Zuführeinheit (152), die das AGR-Gas direkt in die Brennkammer zuführt, und
eine Brennstoffgaszuführeinheit (150), die das Brennstoffgas direkt in die Brennkammer zuführt.

3. Hubkolbenmotor nach Anspruch 2,
wobei die Flüssigbrennstoffzuführeinheit den Flüssigbrennstoff in Richtung auf das AGR-Gas zuführt, das von der AGR-Zuführeinheit direkt in die Brennkammer zugeführt wird.

4. Hubkolbenmotor nach Anspruch 2,
wobei die Brennstoffgaszuführeinheit das Brennstoffgas in Richtung auf das AGR-Gas zuführt, das von der AGR-Zuführeinheit direkt in die Brennkammer zugeführt wird.

5. Hubkolbenmotor nach Anspruch 3,
wobei die Brennstoffgaszuführeinheit das Brennstoffgas in Richtung auf das AGR-Gas zuführt, das von der AGR-Zuführeinheit direkt in die Brennkammer zugeführt wird.

6. Hubkolbenmotor nach einem der Ansprüche 2 bis 5, ferner umfassend:
eine Spülöffnung (120), die in dem Zylinder ausgebildet ist, die bewirkt, dass aktives Gas in den Zylinder strömt, und eine Wirbelströmung mit dem aktiven Gas erzeugt,
wobei die AGR-Zuführeinheit auf einer stromaufwärtigen Seite der Wirbelströmung von mindestens einer von der Brennstoffgaszuführeinheit und der Flüssigbrennstoffzuführeinheit angeordnet ist.

7. Hubkolbenmotor nach Anspruch 1,
wobei die Gaszuführeinheit vorgemischtes Gas direkt in die Brennkammer zuführt, das durch Mischen des AGR-Gases und des Brennstoffgases erhalten ist.

## Revendications

1. Moteur alternatif (100) qui a un piston (112) qui effectue un mouvement alternatif dans un cylindre (110) en raison d'une pression explosive produite dans une chambre de combustion (124) formée dans le cylindre, le moteur alternatif comprenant :
une unité d'alimentation en combustible liquide qui alimente directement en combustible liquide la chambre de combustion,
**caractérisé en ce que**
le moteur alternatif comprend en outre une unité d'alimentation en gaz (150, 152) qui alimente, directement la chambre de combustion, en gaz de combustion et en gaz EGR en tant que gaz d'échappement qui est produit à partir de la combustion dans la chambre de combustion et est évacué de la chambre de combustion.

2. Moteur alternatif selon la revendication 1,
dans lequel l'unité d'alimentation en gaz inclut
une unité d'alimentation à EGR (152) qui alimente directement en gaz EGR la chambre de combustion, et
une unité d'alimentation en gaz de combustion (150) qui alimente directement en gaz de combustion la chambre de combustion.

3. Moteur alternatif selon la revendication 2,
dans lequel l'unité d'alimentation en combustible liquide alimente en combustible liquide en direction du gaz EGR alimentant directement la chambre de combustion à partir de l'unité d'alimentation à EGR.

4. Moteur alternatif selon la revendication 2,
dans lequel l'unité d'alimentation en gaz de combustion alimente en gaz de combustion en direction du gaz EGR alimentant directement la chambre de combustion à partir de l'unité d'alimentation à EGR.

5. Moteur alternatif selon la revendication 3,
dans lequel l'unité d'alimentation en gaz de combustion alimente en gaz de combustion en direction du gaz EGR alimentant directement la chambre de combustion à partir de l'unité d'alimentation à EGR.

6. Moteur alternatif selon l'une quelconque des revendications 2 à 5, comprenant en outre :
un orifice de balayage (120) qui est formé dans le cylindre, amène du gaz actif à s'écouler vers le cylindre, et produit un écoulement tourbillonnant avec le gaz actif,
dans lequel l'unité d'alimentation à EGR est disposée sur un côté amont de l'écoulement tourbillonnant à partir d'au moins l'une parmi l'unité d'alimentation en gaz de combustion et l'unité d'alimentation en combustible liquide.

7. Moteur alternatif selon la revendication 1,
dans lequel l'unité d'alimentation en gaz alimente, directement la chambre de combustion, en gaz prémélangé obtenu par mélange du gaz EGR et du gaz de combustion.
